# EUROPEAN PATENT SPECIFICATION

(11) **EP 3 079 534 B1**
(45) Date of publication and mention of the grant of the patent: **11.04.2018**
(21) Application number: 14802010.0
(22) Date of filing: 19.11.2014
(51) Int. Cl.: A47J 31/44, A47J 47/16

(54) **DEVICE FOR TRANSFERRING CAPSULES**
VORRICHTUNG ZUR ÜBERTRAGUNG VON KAPSELN
DISPOSITIF POUR TRANSFÉRER DES CAPSULES

(30) Priority: 10.12.2013 IT VR20130275
(43) Date of publication of application: 19.10.2016
(73) Proprietor: Componenti Vending S.p.A., 20122 Milano (IT)
(72) Inventor: VANNINI, Antonio, I-57023 CECINA (IT); DI TRANI, Marco, I-20090 Trezzano sul Naviglio (IT)
(74) Representative: Modiano, Micaela Nadia
(86) International application number: PCT/EP2014/075042
(87) International publication number: WO 2015/086275

(56) References cited:
- EP-A1- 2 494 894
- DE-U1-202006 009 226
- US-S1- D 625 570

## Description

The present invention relates to a device for transferring capsules, particularly but not exclusively for hot beverage vending machines.

Currently, beverage vending machines that use capsules are known.

Such capsules can be, in some cases, loaded loosely inside containment bodies or, in other cases, can be stacked in tidy columns.

This last ordering method allows to differentiate the flavors of the capsules thanks to the possibility to have a plurality of columns inside the vending machine.

The arrangement of the capsules in columns, however, suffers some drawbacks.

A first and main drawback of this solution consists in the difficulty of the loading operations of the capsules, which have to be performed manually.

The aim of the present invention is to provide a device for transferring capsules that is capable of eliminating or at least reducing drastically the drawback noted above.

Within this aim, an object of the present invention is to provide a device for transferring capsules that makes the loading of the capsules in the respective columns extremely simple and fast.

Another object of the invention is to provide a device for transferring capsules that allows to align the capsules and arrange them correctly by picking them up directly from the packaging, without having to touch them with the hands.

Another object of the present invention is to provide a device for transferring capsules that allows to keep the capsules aligned during their loading.

Finally, the invention relates to a device for transferring capsules that has a competitive production cost, so that its use is advantageous also from the economic standpoint.

This aim and these and other objects that will become better apparent hereinafter are achieved by a device for transferring capsules according to the provisions of claim 1.

Further characteristics and advantages of the invention will become better apparent from the description of some preferred but not exclusive embodiments of a device for transferring capsules according to the present invention, illustrated by way of non-limiting example in the accompanying drawings, wherein:

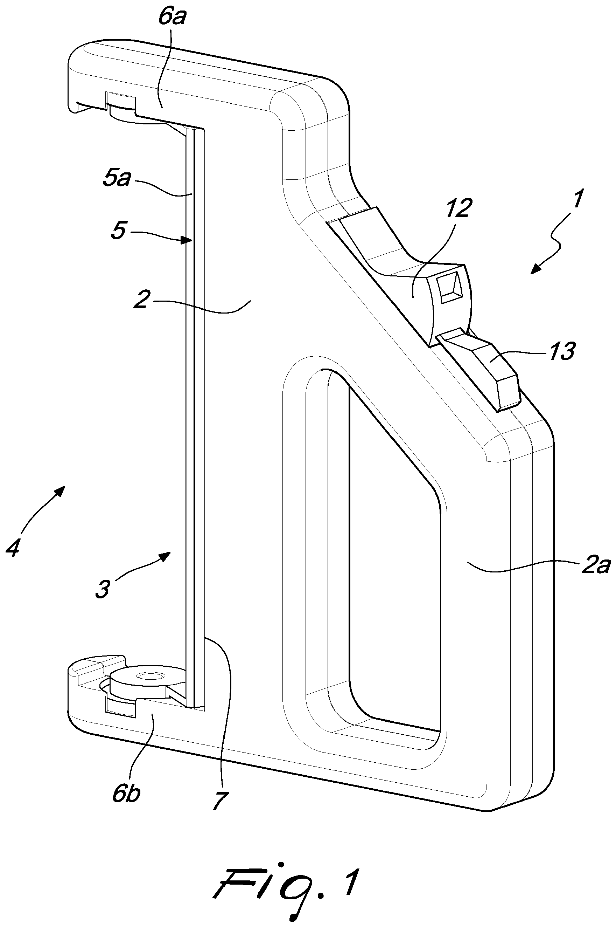

Figure 1 is a perspective view of a device for transferring capsules;
Figures 2 to 5 are again perspective views of the device for transferring capsules in the step for picking up the capsules from the packaging;

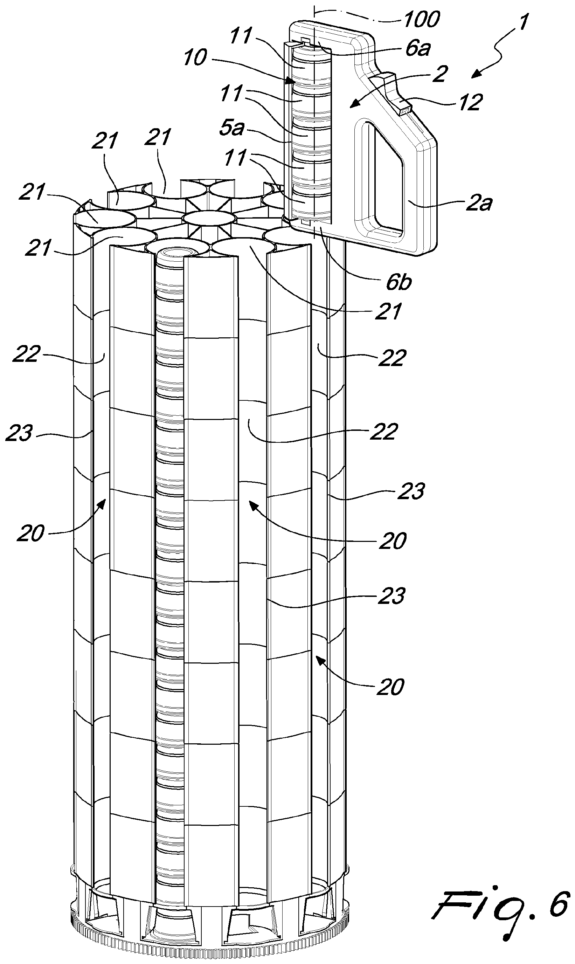

Figures 6 to 8 are again perspective views of the sequence of insertion of the capsules in the respective stacking column.

In the exemplary embodiments that follow, individual characteristics, given in relation to specific examples, may actually be interchanged with other different characteristics that exist in other exemplary embodiments.

The present invention relates to a device 1 for transferring into a stacking column 20 rows 10 of capsules 11 aligned along the respective longitudinal axis 100.

In particular, the device 1 is designed for a device 1 for transferring rows 10 of capsules 11 into a stacking column 20 arranged at hot beverage vending machines.

According to the present invention, the device 1 has a supporting structure 2 that can be gripped by the user and defines at least one accommodation seat 3 for a row 10 of capsules 11 to be loaded, which are aligned along the respective longitudinal axis 100.

The accommodation seat 3 has an access 4 through which it is possible to insert the row 10 of capsules 11 in the accommodation seat 3.

The device 1 has, moreover, means 5 for the at least partial closure of the access 4, which are adapted to allow the retention of the row 10 of capsules 11 in the accommodation seat 3 during their transfer into the stacking column 20.

Advantageously, the closure means 5 can move between a loading condition, in which they allow indeed the insertion of the row 10 of capsules 11 in the accommodation seat 3 through the access 4, and a retention condition, in which the access 4 is at least partially closed.

Preferably, the access 4 comprises an opening that is extended substantially parallel to the longitudinal axis 100 of the row 10 of capsules 11 to be transferred.

With reference to the embodiment shown in the figures, the closure means 5 comprise at least one retention element 5a, 5b.

The or each retention element 5a, 5b can move between a first active condition, in which it is arranged so as to face at least partially a lateral portion of the row 10 of capsules 11 arranged within the accommodation seat 3 in order to close at least partially the access 4, and a second inactive condition, in which it is arranged externally to the access 4 in order to allow the insertion of the row 10 of capsules 11 in the accommodation seat 3.

Conveniently, the supporting structure 2 comprises a first end body and a second end body 6a, 6b, which are designed to arrange themselves so as to face at least partially the axial ends of the row 10 of capsules 11 to be transferred.

The supporting structure 2 defines, moreover, a handle 2a that is arranged, in this case, on the opposite site with respect to the accommodation seat 3.

Preferably, the supporting structure 2 comprises a fixed lateral retention body 7.

In particular, the fixed lateral retention body 7 cooperates with the or each retention element 5a, 5b in order to define, when the retention element or elements 5a, 5b reach the first active condition, the accommodation seat 3.

With reference to the embodiment shown in the figures, the or each retention element 5a, 5b is arranged, in the second inactive condition, in a position that is proximate to the fixed lateral retention body 7.

Advantageously, the device 1 for transferring capsules according to the invention comprises, moreover, a stacking column 20 that is provided with a cylindrical containment body 21.

Preferably, the stacking column 20 is accommodated inside a hot beverage vending machine, not shown in the figures.

Conveniently, the hot beverage vending machine accommodates a plurality of stacking columns 20, which can be arranged side by side or, as shown in the figures, arranged so as to be spaced angularly about a central axis.

The or each cylindrical containment body 21 defines internally a containment seat 22 for the stacked capsules 11.

In greater detail, the or each cylindrical containment body 21 has a longitudinal slot 23.

The longitudinal slot 23 can be engaged slidingly by a portion of the supporting structure 2, while the accommodation seat 3 containing the row 10 of capsules 11 to be transferred can slide within the containment seat 22.

Conveniently, the device 1 comprises an actuation device that is adapted to allow the passage of the or each retention element 5a, 5b from the first active condition to an extraction condition, in which the retention element 5a, 5b faces the longitudinal slot 23 in order to allow the extraction of the supporting structure 2 from the containment seat 22 by moving along a direction that is substantially perpendicular to the plane of arrangement of the longitudinal slot 23.

Preferably, the or each retention element 5a, 5b is arranged, in the extraction condition, at the second inactive condition.

For this purpose, the supporting structure 2 can be associated with an actuation button 12 that is kinematically connected to each retention element 5a, 5b in order to actuate its passage from the active condition to the inactive condition or vice versa and to the extraction condition, if different from the inactive condition.

The actuation button 12 can be associated with elastic loading means adapted to keep it in the position that corresponds to the inactive condition of the retention element 5a.

In this case a detent 13 may be provided which is adapted to lock the actuation button in the position that corresponds to the active condition.

Preferably, both the fixed lateral retention body 7 and the or each retention element 5a, 5b are extended parallel to the longitudinal axis 100 of the row 10 of capsules 11.

Advantageously, the or each retention element 5a, 5b can rotate on command about a rotation axis that is substantially parallel to the longitudinal axis 100 of the row 10 of capsules 11.

Preferably, the rotation axis corresponds to the longitudinal axis 100 of the row 10 of capsules 11.

As shown in the figures, the closure means 5 comprise two retention elements 5a, 5b, which can move about a rotation axis that corresponds substantially to the longitudinal axis 100 of the row 10 of capsules 11, in mutually opposite directions.

Advantageously, the two retention elements 5a, 5b in the active condition are mutually angularly spaced around the longitudinal axis 100 of the row 10 of capsules 11.

Moreover, the retention elements 5a, 5b are angularly spaced also from the fixed retention body 7.

Use of the device 1 for transferring into a stacking column 20 rows 10 of capsules 11 is as follows.

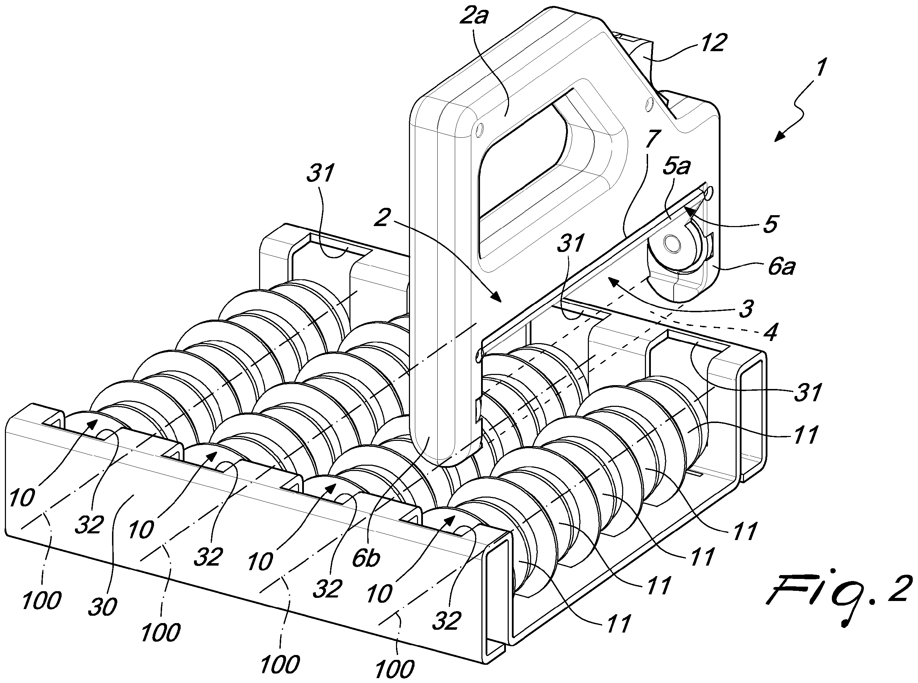

As shown in Figure 2, the user, by acting on the handle 2a, brings the first end body and the second end body 6a, 6b at the axial ends of the row 10 of capsules 11 to be picked up.

During this operation, the access 4 is not closed by the closure means 5 and therefore can be crossed by the row 10 of capsules 11.

The package 30 is conveniently provided, at the axial ends of the rows 10 of capsules 11, with recesses 31 and 32 inside which the first end body and the second end body 6a, 6b can be inserted.

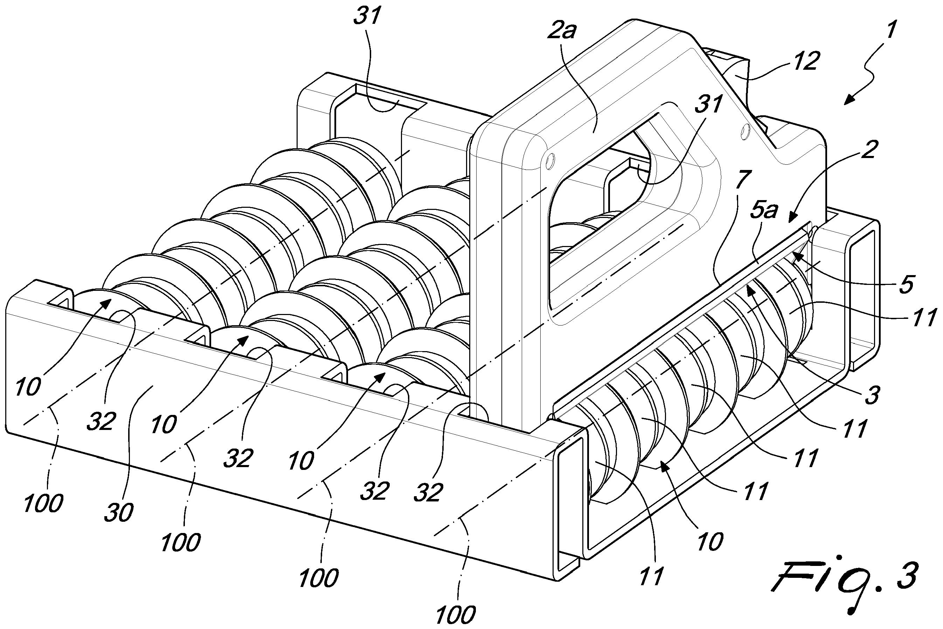

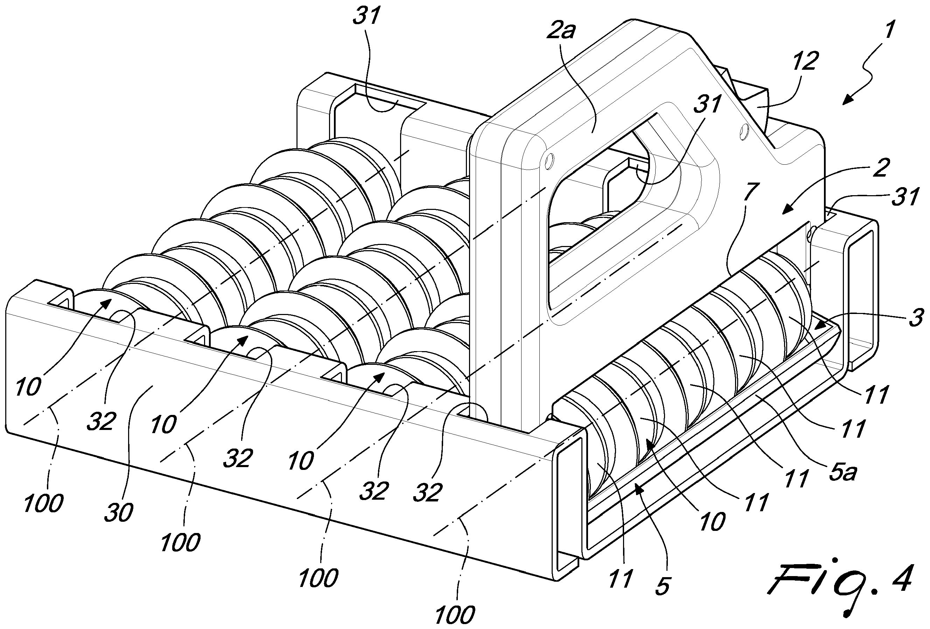

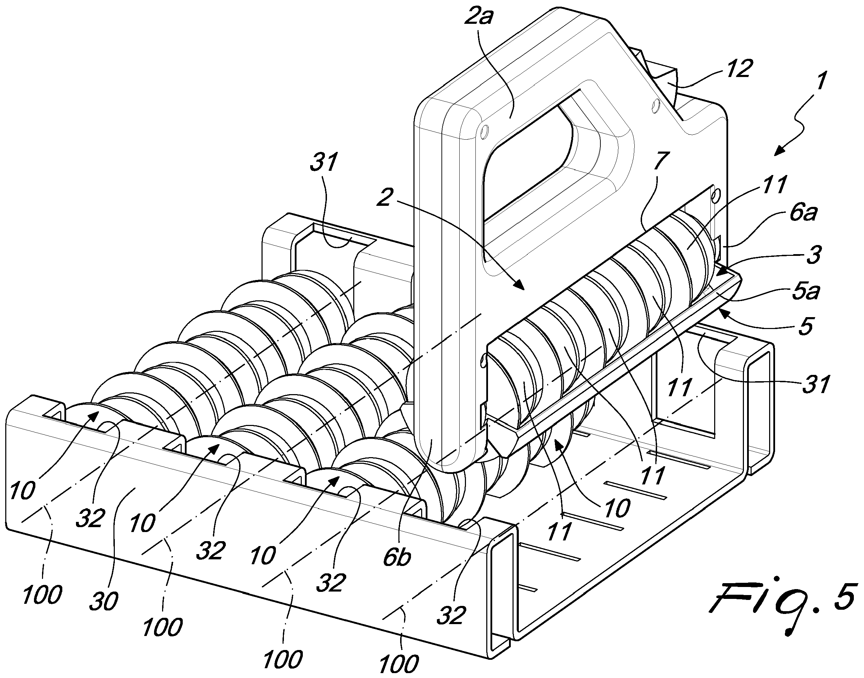

Once the row 10 of capsules 11 has been accommodated (Figure 3) in the accommodation seat 3, the user acts on the closure means 5, by acting for example on the actuation button 12, in order to bring the closure means to the retention condition (Figure 4) in which the access 4 is closed at least partially in order to allow the retention of the row 10 of capsules 11 inside the accommodation seat 3 during transfer into the stacking column 20 (Figure 5).

Specifically, the actuation button 12 causes the movement of the retention elements 5a, 5b in order to bring them into the active condition.

At this point, the row 10 of capsules 11 is retained (Figure 5) in the accommodation seat 3 by the first end body and the second end body 6a, 6b, by the fixed retention body 7 and by the retention elements 5a, 5b in the active condition.

The user then brings the accommodation seat 3, within which the row 10 of capsules 11 is accommodated, inside the cylindrical containment body 21.

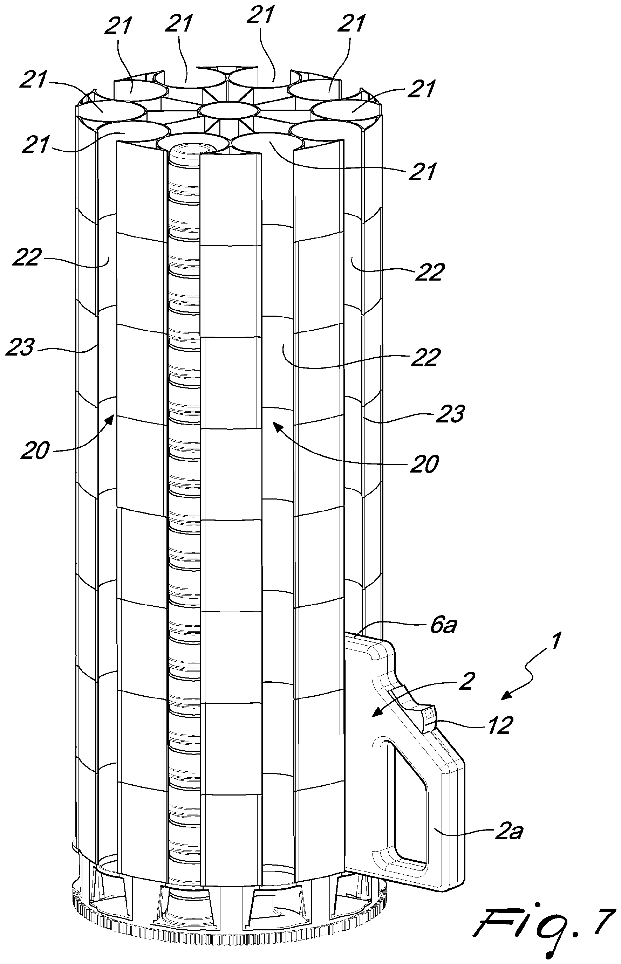

The supporting structure 2 is made to slide downwardly along the longitudinal slot 23 while the accommodation seat 3 that contains the row 10 of capsules 11 to be transferred can slide within the containment seat 22 (Figure 7).

The user acts on the actuation device, conveniently constituted by the actuation button 12 proper, in order to move the retention elements 5a, 5b from the first active condition to the extraction condition (which corresponds in this case to the second inactive condition) so that the retention elements 5a, 5b face the longitudinal slot 23.

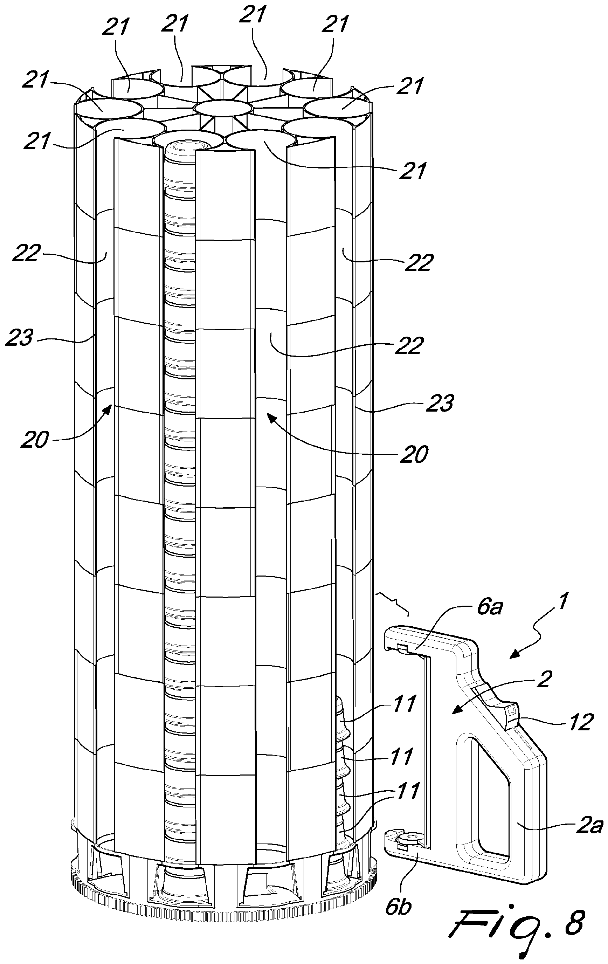

In this manner (as shown in Figure 8), the user can extract the supporting structure 2 from the containment seat 22 by moving along a direction that is substantially perpendicular to the longitudinal slot 23.

The invention thus conceived is susceptible of numerous modifications and variations, all of which are within the scope of the appended claims.

In practice it has been found that in all its embodiments the invention has achieved the intended aim and objects.

In particular, the device 1 for transferring capsules makes it extremely easy and fast to load the capsules in the respective columns.

Moreover, the use of the device 1 according to the invention allows to align and arrange the capsules in a correct manner by picking them up directly from the packaging, without the need to touch them with the hands.

In practice, the materials used, so long as they are compatible with the specific use, as well as the shapes and dimensions, may be any according to requirements.

All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for transferring into a stacking column (20) rows (10) of capsules (11) aligned along the respective longitudinal axis (100), the device comprising a supporting structure (2) that can be gripped by the user and defines at least one accommodation seat (3) for a row (10) of capsules (11) to be loaded, which are aligned along the respective longitudinal axis (100), said accommodation seat (3) having an access (4) through which it is possible to insert in said accommodation seat (3) said row (10) of capsules (11), **characterized in that** means (5) are provided for the at least partial closure of said access (4) in order to allow the retention of said row (10) of capsules (11) in said accommodation seat (3) during transfer into said stacking column (20).

2. The device (1) for transferring capsules according to claim 1, **characterized in that** said closure means (5) can move between a loading condition, in which they allow the insertion of said row (10) of said capsules (11) in said accommodation seat (3) through said access (4), and a retention condition, in which said access (4) is at least partially closed.

3. The device (1) for transferring capsules according to one or more of the preceding claims, **characterized in that** said access (4) comprises an opening that is extended substantially parallel to the longitudinal axis (100) of said row (10) of capsules (11) to be transferred.

4. The device (1) for transferring capsules according to one or more of the preceding claims, **characterized in that** said closure means (5) comprise at least one retention element (5a, 5b) that can move between a first active condition, in which it is arranged so as to face at least partially a lateral portion (10a) of the row (10) of capsules (11) arranged within said accommodation seat (3) in order to close at least partially said access (4), and a second inactive condition, in which it is arranged externally to said access (4) in order to allow the insertion of said row (10) of capsules (11) in said accommodation seat (3).

5. The device (1) for transferring capsules according to one or more of the preceding claims, **characterized in that** said supporting structure (2) comprises a first end body and a second end body (6a, 6b) designed to arrange themselves so as to face at least partially the axial ends of the row (10) of capsules (11) to be transferred.

6. The device (1) for transferring capsules according to one or more of the preceding claims, **characterized in that** said supporting structure (2) comprises a fixed lateral retention body (7), which cooperates with said at least one retention element (5a, 5b) in order to define, when said at least one retention element (5a, 5b) is in said first active condition, said accommodation seat (3).

7. The device (1) for transferring capsules according to one or more of the preceding claims, **characterized in that** said at least one retention element (5a, 5b) is arranged, in said second inactive condition, in a position that is proximate to said fixed lateral retention body (7).

8. The device (1) for transferring capsules according to one or more of the preceding claims, **characterized in that** it comprises a stacking column (20) that is provided with a cylindrical containment body (21) that defines internally a containment seat (22) for said stacked capsules (11), said cylindrical containment body (21) being provided with a longitudinal slot (23) that can be engaged slidingly by a portion of said supporting structure (2) while said accommodation seat (3) containing said row (10) of capsules (11) to be transferred can slide within said containment seat (22).

9. The device (1) for transferring capsules according to one or more of the preceding claims, **characterized in that** it comprises an actuation device that is adapted to allow the passage of said at least one retention element (5a, 5b) from said first active condition to an extraction condition, in which said at least one retention element (5a, 5b) faces said longitudinal slot (23) in order to allow the extraction of said supporting structure (2) from said containment seat (22) by moving along a direction that is substantially perpendicular to said longitudinal slot (23).

10. The device (1) for transferring capsules according to one or more of the preceding claims, **characterized in that** said retention element (5a, 5b) is arranged, in said extraction condition, at said second inactive condition.

11. The device (1) for transferring capsules according to one or more of the preceding claims, **characterized in that** said fixed lateral retention body (7) and said at least one retention element (5a, 5b) are extended parallel to the longitudinal axis (100) of said row (10) of capsules (11).

12. The device (1) for transferring capsules according to one or more of the preceding claims, **characterized in that** said retention element (5a, 5b) can rotate on command about a rotation axis that is substantially parallel to the longitudinal axis (100) of said row (10) of capsules (11).

13. The device (1) for transferring capsules according to one or more of the preceding claims, **characterized in that** said at least one retention element (5a, 5b) can rotate on command about a rotation axis that corresponds substantially to the longitudinal axis (100) of said row (10) of capsules (11).

14. The device (1) for transferring capsules according to one or more of the preceding claims, **characterized in that** it comprises two retention elements (5a, 5b) that can move about a rotation axis that corresponds substantially to the longitudinal axis (100) of said row (10) of capsules (11), said two retention elements (5a, 5b) in said active condition being mutually angularly spaced around the longitudinal axis (100) of said row (10) of capsules (11).

15. The device (1) for transferring capsules according to one or more of the preceding claims, **characterized in that** it comprises two retention elements (5a, 5b) that can move about a rotation axis in opposite directions.

## Patentansprüche

1. Eine Vorrichtung (1) zum Übertragen von Reihen (10) von Kapseln (11), die entlang der jeweiligen Längsachse (100) ausgerichtet sind, in einen Stapelturm (20), wobei die Vorrichtung eine tragende Struktur (2) umfasst, die vom Benutzer ergriffen werden kann und mindestens einen Aufnahmesitz (3) für eine Reihe (10) von Kapseln (11), die zu laden sind, die entlang der jeweiligen Längsachse (100) ausgerichtet sind, bestimmt; wobei der Aufnahmesitz (3) einen Zugang (4) hat, durch den es möglich ist, die Reihe (10) von Kapseln (11) in den Aufnahmesitz (3) einzuführen; **dadurch gekennzeichnet, dass** Mittel (5) zum zumindest partiellen Verschließen des Zugangs (4) bereitgestellt sind, um das Halten der Reihe (10) von Kapseln (11) in dem Aufnahmesitz (3) während des Übertragens in den Stapelturm (20) zu ermöglichen.

2. Die Vorrichtung (1) zum Übertragen von Kapseln gemäß Anspruch 1, **dadurch gekennzeichnet, dass** die Verschlussmittel (5) sich bewegen können zwischen einem Beladezustand, in dem sie das Einführen der Reihe (10) der Kapseln (11) in den Aufnahmesitz (3) durch den Zugang (4) ermöglichen, und einem Haltezustand, in dem der Zugang (4) zumindest teilweise verschlossen ist.

3. Die Vorrichtung (1) zum Übertragen von Kapseln gemäß einem oder mehreren der obigen Ansprüche, **dadurch gekennzeichnet, dass** der Zugang (4) eine Öffnung umfasst, die sich im Wesentlichen parallel zur Längsachse (100) der Reihe (10) von Kapseln (11), die übertragen werden sollen, erstreckt.

4. Die Vorrichtung (1) zum Übertragen von Kapseln gemäß einem oder mehreren der obigen Ansprüche, **dadurch gekennzeichnet, dass** die Verschlussmittel (5) mindestens ein Halteelement (5a, 5b) umfassen, das sich zwischen einem ersten, aktiven Zustand, in dem es so angeordnet ist, dass es zumindest teilweise einem seitlichen Abschnitt (10a) der Reihe (10) von Kapseln (11) zugewandt ist, angeordnet innerhalb des Aufnahmesitzes (3), um den Zugang (4) zumindest teilweise zu verschließen, und einem zweiten, inaktiven Zustand bewegen kann, in welchem es außerhalb des Zugangs (4) angeordnet ist, um das Einführen der Reihe (10) von Kapseln (11) in den Aufnahmesitz (3) zu ermöglichten.

5. Die Vorrichtung (1) zum Übertragen von Kapseln gemäß einem oder mehreren der obigen Ansprüche, **dadurch gekennzeichnet, dass** die tragende Struktur (2) einen ersten Endkörper und einen zweiten Endkörper (6a, 6b) umfasst, konstruiert, um so angeordnet zu werden, dass sie zumindest teilweise den axialen Enden der Reihe (10) von Kapseln (11), die übertragen werden sollen, zugewandt sind.

6. Die Vorrichtung (1) zum Übertragen von Kapseln gemäß einem oder mehreren der obigen Ansprüche, **dadurch gekennzeichnet, dass** die tragende Struktur (2) einen feststehenden seitlichen Haltekörper (7) umfasst, der mit dem mindestens einen Halteelement (5a, 5b) zusammenwirkt, um, wenn das mindestens eine Halteelement (5a, 5b) sich in dem ersten, aktiven Zustand befindet, den Aufnahmesitz (3) zu bestimmen.

7. Die Vorrichtung (1) zum Übertragen von Kapseln gemäß einem oder mehreren der obigen Ansprüche, **dadurch gekennzeichnet, dass** das mindestens eine Halteelement (5a, 5b) in dem zweiten, inaktiven Zustand sich in einer Position befindet, die an den feststehenden seitlichen Haltekörper (7) angrenzt.

8. Die Vorrichtung (1) zum Übertragen von Kapseln gemäß einem oder mehreren der obigen Ansprüche, **dadurch gekennzeichnet, dass** sie einen Stapelturm (20) umfasst, der mit einem zylindrischen Behälterkörper (21) ausgestattet ist, welcher innen einen Aufnahmesitz (22) für die gestapelten Kapseln (11) bestimmt, wobei der zylindrische Behälterkörper (21) mit einem Längsschlitz (23) versehen ist, der verschiebbar von einem Teil der tragenden Struktur (2) in Eingriff gebracht werden kann, während der Aufnahmesitz (3), der die Reihe (10) von Kapseln (11) enthält, die übertragen werden sollen, innerhalb des Aufnahmesitzes (22) gleiten kann.

9. Die Vorrichtung (1) zum Übertragen von Kapseln gemäß einem oder mehreren der obigen Ansprüche, **dadurch gekennzeichnet, dass** sie eine Antriebsvorrichtung umfasst, die ausgebildet ist, um den Übergang des mindestens einen Halteelements (5a, 5b) aus dem ersten, aktiven Zustand in einen Ausziehzustand zu ermöglichen, in dem das mindestens eine Halteelement (5a, 5b) dem Längsschlitz (23) zugewandt ist, um das Herausziehen der tragenden Struktur (2) aus dem Aufnahmesitz (22) durch Bewegen in einer Richtung zu ermöglichen, die im Wesentlichen senkrecht zu dem Längsschlitz (23) ist.

10. Die Vorrichtung (1) zum Übertragen von Kapseln gemäß einem oder mehreren der obigen Ansprüche, **dadurch gekennzeichnet, dass** das Halteelement (5a, 5b) sich in dem Ausziehzustand in dem zweiten, inaktiven Zustand befindet.

11. Die Vorrichtung (1) zum Übertragen von Kapseln gemäß einem oder mehreren der obigen Ansprüche, **dadurch gekennzeichnet, dass** der feststehende seitliche Haltekörper (7) und das mindestens eine Halteelement (5a, 5b) sich parallel zur Längsachse (100) der Reihe (10) von Kapseln (11) erstrecken.

12. Die Vorrichtung (1) zum Übertragen von Kapseln gemäß einem oder mehreren der obigen Ansprüche, **dadurch gekennzeichnet, dass** das Halteelement (5a, 5b) sich auf Befehl um eine Drehachse drehen kann, die im Wesentlichen parallel zur Längsachse (100) der Reihe (10) von Kapseln (11) ist.

13. Die Vorrichtung (1) zum Übertragen von Kapseln gemäß einem oder mehreren der obigen Ansprüche, **dadurch gekennzeichnet, dass** das mindestens eine Halteelement (5a, 5b) sich auf Befehl um eine Drehachse drehen kann, die im Wesentlichen der Längsachse (100) der Reihe (10) von Kapseln (11) entspricht.

14. Die Vorrichtung (1) zum Übertragen von Kapseln gemäß einem oder mehreren der obigen Ansprüche, **dadurch gekennzeichnet, dass** sie zwei Halteelemente (5a, 5b) umfasst, die sich um eine Drehachse drehen können, die im Wesentlichen der Längsachse (100) der Reihe (10) von Kapseln (11) entspricht, wobei die zwei Halteelemente (5a, 5b) in dem aktiven Zustand winklig um die Längsachse (100) der Reihe (10) von Kapseln (11) voneinander beabstandet sind.

15. Die Vorrichtung (1) zum Übertragen von Kapseln gemäß einem oder mehreren der obigen Ansprüche, **dadurch gekennzeichnet, dass** sie zwei Halteelemente (5a, 5b) umfasst, die sich in entgegengesetzten Richtungen um eine Drehachse bewegen können.

## Revendications

1. Dispositif (1) pour transférer dans une colonne d'empilement (20) des rangées (10) de capsules (11) alignées le long de l'axe longitudinal respectif (100), le dispositif comprenant une structure de support (2) qui peut être saisie par l'utilisateur et définit au moins un support d'accueil (3) pour une rangée (10) de capsules (11) destinées à être chargées, qui sont alignées le long de l'axe longitudinal respectif (100), ledit support d'accueil (3) possédant un accès (4) à travers lequel il est possible d'insérer dans ledit support d'accueil (3) ladite rangée (10) de capsules (11), **caractérisé en ce qu'**un moyen (5) est ménagé pour la fermeture au moins partielle dudit accès (4) afin de permettre la rétention de ladite rangée (10) de capsules (11) dans ledit support d'accueil (3) durant le transfert dans ladite colonne d'empilement (20).

2. Dispositif (1) pour transférer des capsules selon la revendication 1, **caractérisé en ce que** ledit moyen de fermeture (5) peut se déplacer entre un état de chargement, dans lequel il permet l'insertion de ladite rangée (10) de dites capsules (11) dans ledit support d'accueil (3) à travers ledit accès (4), et un état de rétention, dans lequel ledit accès (4) est au moins partiellement fermé.

3. Dispositif (1) pour transférer des capsules selon une ou plusieurs des revendications précédentes, **caractérisé en ce que** ledit accès (4) comprend une ouverture qui s'étend sensiblement parallèlement à l'axe longitudinal (100) de ladite rangée (10) de capsules (11) destinées à être transférées.

4. Dispositif (1) pour transférer des capsules selon une ou plusieurs des revendications précédentes, **caractérisé en ce que** ledit moyen de fermeture (5) comprend au moins un élément de rétention (5a, 5b) qui peut se déplacer entre un premier état actif, dans lequel il est agencé de manière à se trouver au moins partiellement en face d'une partie latérale (10a) de la rangée (10) de capsules (11) agencées à l'intérieur dudit support d'accueil (3) afin de fermer au moins partiellement ledit accès (4), et un second état inactif, dans lequel il est agencé extérieurement au dit accès (4) afin de permettre l'insertion de ladite rangée (10) de capsules (11) dans ledit support d'accueil (3).

5. Dispositif (1) pour transférer des capsules selon une ou plusieurs des revendications précédentes, **caractérisé en ce que** ladite structure de support (2) comprend un premier corps d'extrémité et un second corps d'extrémité (6a, 6b) conçus pour s'agencer eux-mêmes de manière à se trouver au moins partiellement en face des extrémités axiales de la rangée (10) de capsules (11) destinées à être transférées.

6. Dispositif (1) pour transférer des capsules selon une ou plusieurs des revendications précédentes, **caractérisé en ce que** ladite structure de support (2) comprend un corps de rétention latéral fixe (7), qui coopère avec ledit au moins un élément de rétention (5a, 5b) afin de définir, lorsque ledit au moins un élément de rétention (5a, 5b) se trouve dans ledit premier état actif, ledit support d'accueil (3).

7. Dispositif (1) pour transférer des capsules selon une ou plusieurs des revendications précédentes, **caractérisé en ce que** le au moins un élément de rétention (5a, 5b) est agencé, dans ledit second état inactif, dans une position qui est proche dudit corps de rétention latéral fixe (7).

8. Dispositif (1) pour transférer des capsules selon une ou plusieurs des revendications précédentes, **caractérisé en ce qu'**il comprend une colonne d'empilement (20) qui est dotée d'un corps de confinement cylindrique (21) qui définit intérieurement un support de confinement (22) pour lesdites capsules empilées (11), ledit corps de confinement cylindrique (21) étant doté d'une fente longitudinale (23) dans laquelle peut s'engager en coulissant une partie de ladite structure de support (2) pendant que ledit support d'accueil (3) qui continent ladite rangée (10) de capsules (11) destinées à être transférées peut coulisser à l'intérieur dudit support de confinement (22).

9. Dispositif (1) pour transférer des capsules selon une ou plusieurs des revendications précédentes, **caractérisé en ce qu'**il comprend un dispositif d'actionnement qui est conçu pour permettre le passage dudit au moins un élément de rétention (5a, 5b) dudit premier état actif dans un état d'extraction, dans lequel ledit au moins un élément de rétention (5a, 5b) se trouve en face de ladite fente longitudinale (23) afin de permettre l'extraction de ladite structure de support (2) dudit support de confinement (22) en se déplaçant dans une direction qui est sensiblement perpendiculaire à ladite fente longitudinale (23).

10. Dispositif (1) pour transférer des capsules selon une ou plusieurs des revendications précédentes, **caractérisé en ce que** ledit élément de rétention (5a, 5b) est agencé, dans ledit état d'extraction, dans ledit second état inactif.

11. Dispositif (1) pour transférer des capsules selon une ou plusieurs des revendications précédentes, **caractérisé en ce que** ledit corps de rétention latéral fixe (7) et ledit au moins un élément de rétention (5a, 5b) s'étendent parallèlement à l'axe longitudinal (100) de ladite rangée (10) de capsules (11).

12. Dispositif (1) pour transférer des capsules selon une ou plusieurs des revendications précédentes, **caractérisé en ce que** ledit au moins un élément de rétention (5a, 5b) peut tourner à la demande autour d'un axe de rotation qui est sensiblement parallèle à l'axe longitudinal (100) de ladite rangée (10) de capsules (11).

13. Dispositif (1) pour transférer des capsules selon une ou plusieurs des revendications précédentes, **caractérisé en ce que** ledit au moins un élément de rétention (5a, 5b) peut tourner sur commande autour d'un axe de rotation qui correspond sensiblement à l'axe longitudinal (100) de ladite rangée (10) de capsules (11).

14. Dispositif (1) pour transférer des capsules selon une ou plusieurs des revendications précédentes, **caractérisé en ce qu'**il comprend deux éléments de rétention (5a, 5b) qui peuvent se déplacer autour d'un axe de rotation qui correspond sensiblement à l'axe longitudinal (100) de ladite rangée (10) de capsules (11), lesdits deux éléments de rétention (5a, 5b) dans ledit état actif étant espacés angulairement l'un par rapport à l'autre autour de l'axe longitudinal (100) de ladite rangée (10) de capsules (11).

15. Dispositif (1) pour transférer des capsules selon une ou plusieurs des revendications précédentes, **caractérisé en ce qu'**il comprend deux éléments de rétention (5a, 5b) qui peuvent se déplacer dans des sens opposés autour d'un axe de rotation.
